(19) Europäisches Patentamt
European Patent Office
Office européen des brevets

(11) **EP 4 001 709 A1**

(12) **EUROPÄISCHE PATENTANMELDUNG**

(43) Veröffentlichungstag:
**25.05.2022 Patentblatt 2022/21**

(21) Anmeldenummer: **20208361.4**

(22) Anmeldetag: **18.11.2020**

(51) Internationale Patentklassifikation (IPC):
*F16K 1/12* (2006.01)   *F16K 15/18* (2006.01)
*F16K 17/04* (2006.01)   *F16K 1/30* (2006.01)
*F16K 31/44* (2006.01)

(52) Gemeinsame Patentklassifikation (CPC):
**F16K 1/12; F01L 3/00; F01L 3/085; F01L 23/00;**
**F16K 1/306; F16K 15/182; F16K 17/0493;**
**F16K 31/44;** F01L 2003/258

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **RD Estate GmbH & Co. KG**
**94469 Deggendorf (DE)**

(72) Erfinder: **Duschl, Robert**
**94469 Deggendorf (DE)**

(74) Vertreter: **Hoffmann Eitle**
**Patent- und Rechtsanwälte PartmbB**
**Arabellastraße 30**
**81925 München (DE)**

(54) **FEDERLOSES STEUERVENTIL FÜR EINEN KOLBENDAMPFMOTOR, EIN DAS STEUERVENTIL AUFWEISENDER KOLBENDAMPFMOTOR, EINE DEN KOLBENDAMPFMOTOR AUFWEISENDE KRAFT-WÄRME-KOPPLUNGSANLAGE SOWIE EIN VERFAHREN ZUM BETREIBEN DES KOLBENDAMPFMOTORS**

(57) Die vorliegende Erfindung betrifft ein federloses Steuerventil 50 zur Steuerung und/oder Regelung einer Fluidströmung, insbesondere einer Dampfströmung die bevorzugt einen Dampfdruck im Bereich von 10 bar bis 180 bar aufweist, in einem Kolbendampfmotor 1, aufweisend: einen Ventilsitz 51, und einen Ventilkörper 52, der entlang einer Zentralachse CA des Steuerventils 50 translatorisch geführt ist und dazu eingerichtet ist, gegen den Ventilsitz 51 in Schließrichtung S des Steuerventils 50 kraftbeaufschlagt zu werden, wobei der Ventilkörper 52 zwischen einer geöffneten Stellung, in der ein Fluid strömen kann, insbesondere durch eine Ventilöffnung (58) im Ventilsitz (51) strömen kann, und einer geschlossenen Stellung, in der kein Fluid strömen kann, bewegbar oder schaltbar ist, wobei der Ventilkörper 52 durch einen Fluiddruck, der bevorzugt durch die zu steuernde und/oder zu regelnde Fluidströmung erzeugt bzw. bereitgestellt wird, gegen den Ventilsitz 51 kraftbeaufschlagbar ist bzw. kraftbeaufschlagt wird. Des Weiteren betrifft die vorliegende Erfindung einen das Steuerventil 50 aufweisenden Kolbendampfmotor 1, eine den Kolbendampfmotor aufweisende Kraft-Wärme-Kopplungsanlage sowie ein Verfahren zum Betreiben des Kolbendampfmotors.

Fig. 2

EP 4 001 709 A1

**Beschreibung**

**Technisches Gebiet**

Die vorliegende Offenbarung betrifft ein federloses Steuerventil für einen Kolbendampfmotor, zum Beispiel einen Kolbendampfmotor der mechanische Arbeit unter Verwendung von Dampf als sein Arbeitsfluid verrichtet. Genauer betrifft die vorliegende Offenbarung ein federloses Steuerventil für einen Kolbendampfmotor, der in der Erzeugung elektrischen Stroms Anwendung findet. Des Weiteren betrifft die vorliegende Offenbarung einen das vorher genannte Steuerventil aufweisenden Kolbendampfmotor, eine den erfindungsgemäßen Kolbendampfmotor aufweisende Kraft-Wärme-Kopplungsanlage sowie ein Verfahren zum Betreiben eines Kolbendampfmotors, insbesondere unter Verwendung des erfindungsgemäßen federlosen Steuerventils. Das vorgeschlagene Steuerventil kann jedoch nicht nur in stationären Kolbendampfmotoren sondern auch in mobilen Anwendungen wie beispielsweise in der Schifffahrt, insbesondere Binnenschifffahrt, Fahrzeugen, insbesondere LKWs, sowie Schienenfahrzeugen zum Einsatz kommen.

**Hintergrund**

Dezentrale Kraft-Wärme-Kopplungsanlagen (KWK-Anlagen) haben sich bereits seit längerer Zeit als vorteilhafte Alternative zur herkömmlichen Kombination von lokaler Heizung und zentralem Stromkraftwerk etabliert. KWK-Anlagen werden zur Gewinnung von elektrischer Energie und der Gewinnung von Nutzwärme genutzt, insbesondere werden KWK-Anlagen vorzugweise am Ort oder in der Nähe der Nutzwärmesenke betrieben. Als Antrieb für den Stromerzeuger können zum Beispiel Verbrennungsmotoren, wie Diesel- oder Ottomotoren, Stirlingmotoren, Dampfmotoren, Brennkraftturbinen oder Dampfmaschinen verwendet werden.

Hinsichtlich KWK-Anlagen hat in jüngster Zeit insbesondere die Verwendung von Dampfmotoren bzw. Kolbendampfmotoren an Interesse gewonnen. Dies liegt vorrangig an dem erzielbaren hohen Gesamtwirkungsgrad bei gleichzeitig geringem Schadstoffausstoß und der fast freien Wahl des flüssigen oder festen Brennstoffs, wie beispielsweise Holz, Pellets, Biogas, oder Biomasse. Der hohe Wirkungsgrad kann durch Dampfdrücke von 40 bar bis 150 bar und Dampftemperaturen von ca. 300 bis 600 °C erzielt werden. Kolbendampfmotoren finden aufgrund der genannten Vorteile auch Anwendung in kleineren Anlagen zur Biomasseverstromung, Abwärmeverstromungsanlagen, Abfallverbrennungsanlagen und thermischen Nachverbrennungsanlagen.

Bekannte Kolbendampfmotoren, wie beispielsweise der in WO 2016/146159 A1 beschriebene, welche insbesondere für die Stromerzeugung verwendet werden, weisen jedoch den Nachteil auf, dass zum Beispiel beim Kaltstart eine relativ hohe Undichtigkeit auftritt. Dies liegt insbesondere daran, dass der in den Kolbendampfmotor eingespritzte Wasserdampf (Heißdampf bzw. Frischdampf) mit einem Druck von 40 bar bis 150 bar in relativ kurzer Zeit in den Kolbenraum eingespritzt wird und dort lange wirkt, was eine hohe Anforderung an die Kolbenringdichtung, welche den Wasserdampf vom Schmieröl im Kurbelwellenraum bzw. in der Ölwanne trennt, stellt.

Um den Kolbendampfmotor, insbesondere den Kolben des Kolbendampfmotors mit einer ausreichenden Dampfmenge, welche unter einem entsprechend hohen Druck steht, effizient betreiben zu können, ist es notwendig, den unter Druck stehenden Dampf/Frischdampf in einer sehr kurzen Zeit und mit präzisem Timing einem Arbeitsraum des Kolbendampfmotors zuzuführen, um den Arbeitszyklus des Kolbens ohne Störungen (mit Rundlauf) betreiben zu können. Hierzu ist ein Steuerventil notwendig, um die Fluidströmung des Frischdampfs zu dem Arbeitsraum des Kolbendampfmotors optimal steuern beziehungsweise regeln zu können.

Solche Ventile zur Steuerung und/oder Regelung einer Fluidströmung umfassen in der Regel einen Ventilsitz und ein Ventilglied, das axial beweglich gelagert ist. Das Ventilglied weist üblicherweise einen Ventilschaft und an einem Ende davon einen Ventilkörper auf. Zur Betätigung des Ventils, d.h. zur axialen Bewegung des Ventilglieds, insbesondere des Ventilkörpers, ist ferner ein Ventiltrieb vorgesehen, der unmittelbar oder mittelbar kraftübertragend mit dem Ventilschaft verbunden ist. Dadurch kann der Ventilkörper zum Öffnen des Ventils von dem Ventilsitz abgehoben und ein Durchfluss durch eine Rohrleitung bzw. das Ventil ermöglicht werden. Um das Ventil in eine geschlossene Stellung zu bringen wird der Ventilkörper wieder in Kontakt mit dem Ventilsitz gebracht und sperrt somit eine Fluidströmung durch die Rohrleitung bzw. das Ventil.

Im Stand der Technik sind Ventile zur Steuerung beziehungsweise Regelung einer Fluidströmung bekannt, bei denen mittels eines Federelements der Ventilkörper in Schließrichtung des Ventils, d.h. in Richtung des Ventilkörpers mit einer Schließkraft beaufschlagen, um das Ventil im unbetätigten Zustand automatisch zu schließen. Durch die oben beschriebenen hohen Temperaturen beim Betrieb eines Kolbendampfmotors treten thermische Veränderungen, insbesondere Materialausdehnungen, auf, welche zur Veränderung des Betriebspunkts des Ventils führen können. Dies kann insbesondere auch daran liegen, dass sich die Federkennlinie des Federelements über den hohen Temperaturbereich (Kaltstart zu Betriebstemperatur) stark verändert. Ferner verschleißen derartige Federelemente unter den genannten Betriebsbedingungen schnell. Dadurch kann es Beispielsweise beim Kaltstart vorkommen, dass das Ventilglied, insbesondere der Ventilkörper mit einer zu großen Kraft in den Ventilsitz gedrückt wird. Bei einer wiederholten Betätigung des Ventils hat dies jedoch einen hohen Verschleiß des Ventilkörpers und/oder des Ventilsitzes zur Folge, der zu einer Leckage des Ventils im geschlossenen Zustand führen kann. Andererseits kann bei hohen Betriebstemperaturen und ersten Verschleißerscheinungen die Federkraft bzw. Spannkraft sinken und damit der Ventilkörper mit einer zu geringen Kraft in den Ventilsitz gedrückt werden. Zudem kann der Verschleiß Bypassströme im Ventil und Störungen im Gesamtsystem, in dem das Ventil zur Steuerung und/oder Regelung eines Fluidstroms eingesetzt wird, zur Folge haben.

**Gegenstand der Erfindung**

Der Erfindung liegt daher die Aufgabe zu Grunde, ein Steuerventil, insbesondere ein federloses Steuerventil, zur Steuerung und/oder Regelung einer Fluidströmung, insbesondere einer Dampfströmung, in einem Kolbendampfmotor bereitzustellen, das in der Lage ist, trotz der im Arbeitszyklus eines Kolbendampfmotors vorliegenden hohen Temperaturen und Drücke ein zuverlässiges und dauerhaftes Schließen bzw. Absperren des Ventils zu gewährleisten, während eine einfache Herstellung sowie leichte Instandhaltung realisiert werden.

Diese Aufgabe wird gelöst durch ein federloses Steuerventil nach Anspruch 1, einen das federlose Steuerventil aufweisenden Kolbendampfmotor nach Anspruch 11, eine den Kolbendampfmotor aufweisende Kraft-Wärme-Kopplungsanlage nach Anspruch 14, sowie ein Verfahren zum Betreiben des Kolbendampfmotors nach Anspruch 15. Bevorzugte Weiterbildungen der Erfindung sind in den abhängigen Ansprüchen gegeben, wobei der Gegenstand der das Steuerventil betreffenden Ansprüche im Rahmen des Kolbendampfmotors, der Kraft-Wärme-Kopplungsanlage sowie dem Verfahren zum Einsatz kommen kann und umgekehrt.

Hierbei ist einer der Grundgedanken der vorliegenden Offenbarung, ein Steuerventil, insbesondere ein federloses Steuerventil bereitzustellen, bei dem ein Ventilkörper, der mit einem Ventilsitz zum Öffnen und Schließen des Ventils zusammenwirkt, rein durch einen Fluiddruck, welcher auf eine dem Ventilsitz abgewandte Seite des Ventilkörpers wirkt, gegen den Ventilsitz kraftbeaufschlagbar ist bzw. kraftbeaufschlagt wird. Mit anderen Worten weist das erfindungsgemäße Steuerventil kein Federelement wie beispielsweise eine Feder (Druckfeder) auf, das dazu eingerichtet ist, den Ventilkörper in einer Schließrichtung des Ventils mit einer Schließkraft zu beaufschlagen.

Auf diese Weise kann ein Steuerventil, insbesondere federloses Steuerventil, bereitgestellt werden, welches das Vorsehen eines Federelements zur Bereitstellung einer Schließkraft des Steuerventils, insbesondere des Ventilkörpers, unnötig macht. Damit kann ein Steuerventil realisiert werden, bei dem trotz der im Arbeitszyklus eines Kolbendampfmotors vorliegenden hohen Temperaturen und Drucke ein zuverlässiges und dauerhaftes Schließen bzw. Absperren des Ventils gewährleistet werden kann, während eine einfache Herstellung sowie leichte Instandhaltung realisiert werden.

Wird bei der vorliegenden Anmeldung von hohen Temperaturen gesprochen, so gilt dies insbesondere für einen Dampfstrom, d. h. Temperaturen jenseits der 100°C. Für den effizienten Betrieb eines Kolbendampfmotors sind darüber hinaus Betriebsparameter mit einem Fluiddruck (Dampfdruck) von, wie oben bereits angeführt, 40 bis 150 bar und Fluidtemperaturen (Dampftemperaturen) von über 500°C nicht unüblich. Bei derartigen Betriebsparametern ist mit einer hohen thermischen Beanspruchung sämtlicher Bauteile, insbesondere hohen thermischen Spannungen, zu rechnen. Ferner ist bei Kolbendampfmotoren aufgrund der geringeren Molekülgröße ($H_2O$) des Wasserdampfs im Vergleich zu den Verbrennungsgasen ($CO_2$) beim Verbrennungsmotor eine sichere Abdichtung schwieriger zu realisieren.

Um dennoch ein dichtes Verschließen des Steuerventils zu ermöglichen, ist es notwendig, äußerst große Schließkräfte des Steuerventils zu realisieren, was nur durch eine entsprechend kleine Kontaktfläche zwischen Ventilkörper und Ventilsitz und dementsprechend hoher Flächenpressung realisierbar ist. Dies führt einerseits jedoch zu hohen Anforderungen an die Güte der Kontaktflächen der beiden Schließelementen, verbunden mit hohem Verschleiß, andererseits zu der Notwendigkeit eines Schließelements das eine entsprechend hohe Schließkraft bereitstellen kann.

Um den oben geschilderten Anforderungen gerecht zu werden, stellt die vorliegende Offenbarung ein Steuerventil bereit, bei dem auf das herkömmliche Federelement zur Bereitstellung der notwendigen Schließkraft verzichtet werden kann, und stattdessen der vorliegende Fluiddruck des Arbeitsmediums zur Bereitstellung der Schließkraft verwendet wird.

Ferner schlägt die vorliegende Offenbarung zur Erfüllung der geforderten Anforderungen vor, ein Steuerventil bereitzustellen, bei dem ein Ventiltrieb vorgesehen ist, welcher einen Ventilkörper (erstes Schließelement) gegen den anliegenden Fluiddruck des Arbeitsmediums aus einem Ventilsitz (zweites Schließelement) herausdrücken kann, wodurch das Steuerventil wie oben beschrieben geöffnet wird. Um trotz der durch den Fluiddruck bereitgestellten hohen Schließkräfte das Steuerventil öffnen zu können, schlägt die vorliegende Offenbarung vor, einen Ventiltrieb zu nutzen, der unmittelbar im Ausströmungsbereich des Steuerventils angeordnet ist beziehungsweise während des Öffnungsvorgang des Steuerventils in diesen eindringen kann (bzw. muss). Aufgrund dieser Tatsache ist der Ventiltrieb einerseits äußert großen thermischen Beanspruchungen ausgesetzt, andererseits stört der Ventiltrieb die durch das Steuerventil ausströmende Fluid. Entsprechend stark ist der Einfluss der Ventiltriebgeometrie und der Ausströmungsverhältnisse auf die Effizienz des Dampfmotors.

Entsprechend liegt ein weiterer Grundgedanke der vorliegenden Offenbarung darin, ein Steuerventil, insbesondere ein federloses Steuerventil, bereitzustellen, bei dem ein Strömungsabschnitt, insbesondere ein Ausströmungsabschnitt, der stromabwärts eines Ventilsitzes des Steuerventils angeordnet ist, derart gestaltet ist, dass sich dieser bei geöffnetem Steuerventil mit einer in etwa konstanten Spaltbreite in Strömungsrichtung der durch das Steuerventil strömenden Fluidströmung erstreckt, insbesondere ausgehend von dem Ventilsitz bis zu einem Ende des Strömungsabschnitts, welcher bevorzugt am Eingang des Arbeitsraums des Kolbendampfmotors liegt.

Auf diese Weise kann ein Steuerventil, insbesondere federloses Steuerventil, bereitgestellt werden, das sicherstellt, dass sich ein Durchflussquerschnitt eines Ausströmungsabschnitt stromabwärts der Ventilöffnung nicht verringert, wodurch ein optimierter Strömungsfluss erzielt werden kann. Dies ermöglicht es dem Fluid, welches durch den Ausströmungsabschnitt strömt, sich kontinuierlich und bevorzugt konstant zu entspannen. Dies ist insbesondere am Beginn des Einlassvorgangs, also zu einem Zeitpunkt, zu dem das Steuerventil gerade maximal geöffnet wurde, wichtig, da zu diesem Zeitpunkt das Druckgefälle am größten und somit die Strömungsgeschwindigkeit am höchsten ist. Auf diese Weise kann ferner sichergestellt werden, dass keine Einschnürungen vorhanden sind, welche den Strömungsfluss des Fluids bzw. des Arbeitsmediums drosseln und somit die Leistung bzw. den Wirkungsgrad des Kolbendampfmotors negativ beeinflussen könnten.

Ein weiterer Grundgedanke der vorliegenden Offenbarung liegt darin, ein Steuerventil, insbesondere ein federloses Steuerventil, bereitzustellen, bei dem der Ventiltrieb an einem dem Ventilsitz zugewandten Ende eine Auflagefläche und an einem dem Ventilsitz abgewandten Ende einen Gewindeabschnitt aufweist und der Ventiltrieb mittels einer Spannmutter 66 in einen oder den oben beschriebenen Kolben des Kolbendampfmotors derart einschraubbar oder eingeschraubt ist, dass eine Klemmlänge des Ventiltriebs oder eines Befestigungsabschnitt des Ventiltriebs so gestaltet oder gewählt ist, dass eine thermische Ausdehnung des Klemmbereichs (mit der Klemmlänge des Ventiltriebs) in etwa einer thermischen Ausdehnung des Kolbenbodens mit der Kolbenbodendicke entspricht, in den der Ventiltrieb einschraubbar/eingeschraubt oder integrierbar/integriert ist.

Auf diese Weise kann ein Ventiltrieb realisiert werden, der trotz der äußerst hohen thermischen Beanspruchungen geringe innere Spannungen oder Verspannungen aufweist, insbesondere in Bezug auf die Befestigung (Schraubenbefestigung) am Kolben. Mit anderen Worten, aufgrund der im Kolbendampfmotor vorliegen hohen Temperaturschwankungen erfahren der Kolben sowie der damit verschraubte Ventiltrieb trotz optimierter Materialauswahl große thermische Ausdehnunungsschwankungen bzw. Längenveränderungen, welche zu Verspannungen in der Schraubverbindung zwischen Kolben und Ventiltrieb führen können. Da jedoch die Klemmlänge des Ventiltriebs auf die Längenausdehnung des Kolbens, insbesondere des Kolbenbodens, abgestimmt ist, können innere Spannungen bzw. Verspannungen, welche zu einer frühzeitigen Ermüdung der Schraubverbindung führen würden, reduziert oder ganz vermieden werden.

Gemäß einem Aspekt der Offenbarung weist ein Steuerventil, insbesondere federloses Steuerventil, zur Steuerung und/oder Regelung einer Fluidströmung, insbesondere einer Dampfströmung die bevorzugt einen Dampfdruck im Bereich von 10 bar bis 180 bar aufweist, in einem Kolbendampfmotor auf: einen Ventilsitz und einen Ventilkörper, der entlang einer Zentralachse des Steuerventils translatorisch geführt ist und dazu eingerichtet ist, gegen den Ventilsitz in Schließrichtung des Steuerventils kraftbeaufschlagt zu werden, wobei der Ventilkörper zwischen einer geöffneten Stellung, in der ein Fluid strömen kann, insbesondere durch eine Ventilöffnung im Ventilsitz strömen kann, und einer geschlossenen Stellung, in der kein Fluid strömen kann, bewegbar oder schaltbar ist, wobei der Ventilkörper durch einen Fluiddruck, der bevorzugt durch die zu steuernde und/oder zu regelnde Fluidströmung erzeugt oder bereitgestellt wird, insbesondere den Arbeitsdruck der Dampfströmung oder des Arbeitsmediums, gegen den Ventilsitz kraftbeaufschlagbar ist bzw. kraftbeaufschlagt wird.

Durch beaufschlagen des Ventilkörpers mit Fluiddruck oder Dampfdruck, insbesondere mit Druck des Arbeitsfluids, dem zugeführten Frischdampf, kann eine ausreichend hohe Kraftbeaufschlagung des Ventilkörpers gegen den Ventilsitz gewährleistet werden. Ferner reguliert sich auf diese Weise die Schließkraft des Steuerventils selbstständig bzw. automatisch. Mit anderen Worten, in dem Fall, dass der Kolbendampfmotor unter höheren Drücken (Dampfdrücken) und damit höherer Leistung betrieben wird, steigen die notwendigen Schließkräfte des Steuerventils, anhand deren eine ausreichende Dichtheit/Abdichtung des Steuerventils gewährleistet werden kann, an. Da jedoch der Dampfdruck des Arbeitsfluids oder Frischdampfs direkt verwendet wird, um die notwendige Schließkraft des Steuerventils bereitzustellen, steigt mit höherem Arbeitsdruck auch die zur Verfügung stehende Schließkraft an.

Unter dem Begriff "Frischdampf" ist in der vorliegenden Offenbarung ein Dampf/Heißdampf zu verstehen, der beispielsweise von einem Dampferzeuger einem Kolbendampfmotor zum Betrieb des Kolbendampfmotors zugeführt wird. Der Frischdampf weißt hierbei in der Regel Drücke im Bereich von 10 bis 180 bar und Temperaturen über 500°C auf. Aufgrund des vorgeschlagenen federlosen Steuerventils sowie der nachstehend beschriebenen Vermeidung von thermischen Spannungen innerhalb des Steuerventils ist es möglich, den Kolbendampfmotor selbst im überkritischen Hochtemperaturbereich mit Drücken von 200 bar bis 1000 bar und Temperaturen im Bereich von 200°C bis 700°C zu betreiben. Gemäß einem weiteren Aspekt der vorliegenden Offenbarung ist das Steuerventil ohne ein Federelement, insbesondere eine Feder, das dazu eingerichtet ist, den Ventilkörper in Schließrichtung des Steuerventils gegen den Ventilsitz mit einer Schließkraft zu beaufschlagen, ausgebildet, bzw. kann das Steuerventil ohne dieses Federelement seine Funktion erfüllen.

Des Weiteren ist es vorteilhaft, wenn das federlose Steuerventil eine Hubbegrenzungseinrichtung aufweist, die dazu eingerichtet ist, eine nach oben Bewegung oder eine Öffnungsbewegung des Ventilkörpers oder eine Bewegung entgegengesetzt zu der Schließrichtung des Ventilkörpers zu begrenzen, wobei die Bewegung des Ventilkörpers bevorzugt in einem Bereich von 1 mm bis 6 mm, bevorzugt 2 mm bis 3 mm, liegt.

Auf diese Weise kann sichergestellt werden, dass der Ventilkörper durch einen Impuls, der durch einen später im Detail beschriebenen Ventiltrieb, der zum Öffnen des Steuerventils den Ventilkörper von dem Ventilsitz abhebet, in den Ventilkörper eingeleitet wird, nicht durch seine Eigenmasse überschwingt. Mit anderen Worten zu stark das Schwingen um seine Ruhelage beginnt.

Ferner ist es bevorzugt, dass die Hubbegrenzungseinrichtung einen Begrenzungsstab aufweist, der dazu eingerichtet ist, die Öffnungsbewegung oder Hubbewegung des Ventilkörpers entgegen der Schließrichtung zu begrenzen, wobei eine Längsachse des Begrenzungsstabs parallel, insbesondere konzentrisch, zu der Zentralachse des Steuerventils angeordnet ist oder verläuft.

Des Weiteren ist es vorteilhaft, wenn der Begrenzungsstab derart gestaltet ist, dass in der (vollständig) geöffneten Stellung des Steuerventils, d.h. wenn der Ventilkörper maximal von dem Ventilsitz beabstandet ist) ein Spalt zwischen dem Ventilkörper und dem Begrenzungsstab vorhanden ist oder verbleibt, wobei der Spalt bevorzugt eine Breite von 2 bis 3 mm, weiter bevorzugt von 2 mm, aufweist.

Gemäß einem weiteren Aspekt der vorliegenden Offenbarung ist der Ventilkörper als ein Vollkörper oder als ein zumindest teilweise hohlförmig geformter Körper ausgebildet ist, wobei wenn der Ventilkörper zumindest teilweise hohlförmig geformt ist, bevorzug eine Bohrung, insbesondere eine Sackbohrung, in dem Ventilkörper ausgebildet ist, wobei die Bohrung bevorzugt an einer dem Ventilsitz abgewandten Seite des Ventilkörpers vorgesehen ist.

Hierbei ist im Rahmen der vorliegenden Erfindung unter "Vollkörper" zu verstehen, dass der Ventilkörper aus einem Vollmaterial hergestellt wurde, wie beispielsweise einer Metallwelle, entsprechend weist der Vollkörper keine hohlen Abschnitte auf.

Ferner ist es bevorzugt, wenn der Begrenzungsstab derart gestaltet ist, dass dieser in die Bohrung des Ventilkörpers zumindest abschnittsweise eintaucht, wobei zwischen dem Begrenzungsstab und der in den Ventilkörper eingebrachten Bohrung, insbesondere einer Außenumfangsfläche des Begrenzungsstabs und einer Innenumfangsfläche der Bohrung, ein Spalt, insbesondere ein Luftspalt, ausgebildet ist.

Auf diese Weise kann die Masse des Ventilkörpers und damit dessen Trägheit reduziert werden, was dessen Schwingungsverhalten positiv beeinflusst.

Hierbei ist es bevorzugt, wenn der Spalt zwischen der Bohrung und dem Begrenzungsstab, insbesondere in Radialrichtung gesehen, eine Breite von 2 bis 3 mm, bevorzugt 2 mm, aufweist.

Des Weiteren ist es vorteilhaft, wenn der Ventilkörper an einem dem Ventilsitz zugewandten axialen Ende eine Kontaktfläche aufweist, die bevorzugt an einem Vorsprung des Ventilkörpers ausgebildet ist, und dazu eingerichtet ist, mit einem Ventiltrieb kraftübertragend zusammenzuwirken, um den Ventilkörper von dem Ventilsitz abzuheben oder entlang der Zentralachse von dem Ventilsitz wegzubewegen oder zu entfernen, insbesondere gegen den daran anliegenden Fluiddruck, um dadurch das (federlose) Steuerventil zu öffnen, wobei der Ventiltrieb und der Ventilkörper bevorzugt entkoppelt ausgebildet sind.

Unter einer Entkopplung ist hierbei zu verstehen, dass sich der Ventiltrieb und der Ventilkörper relativ zueinander und unabhängig voneinander bewegen können.

Es ist ebenfalls bevorzugt, dass der Begrenzungsstab derart ausgestaltet ist, insbesondere eine Länge des Begrenzungsstab so gewählt ist, dass in der vollständig bzw. zu 100% geöffneten Stellung des Steuerventils, in welcher der Ventilkörper durch den Ventiltrieb gegen den Fluiddruck des in das Steuerventil eingeleitete Arbeitsmediums oder gegen den Arbeitsdruck der eingeleiteten Dampfströmung von dem Ventilsitz maximal abgehoben bzw. weggedrückt ist, der Begrenzungsstab, insbesondere eine dem Ventilsitz zugewandte Endfläche des Begrenzungsstab (im Normalbetrieb), nicht mit dem Ventilkörper, insbesondere einem Bohrungsgrund der Bohrung, in Kontakt gelangt bzw. gelangen kann. Hierbei ist die Länge bevorzugt so gewählt, dass im Normalbetrieb des Kolbendampfmotors trotz eines leichten Überschwingens des Ventilkörpers durch einen in diesen durch den Ventiltrieb eingeleiteten Impuls, der Ventilkörper nicht mit dem Begrenzungsstab in Kontakt kommt. Treten jedoch zum Beispiel größere Lastwechsel auf, kann es vorkommen, dass in den Ventilkörper größerer Impulse eingeleitet werden und dieser zu stark das Schwingen anfangen würde. In diesem Fall wird die Schwingungsamplitude des Ventilkörpers jedoch durch den Begrenzungsstab auf einen vorbestimmten Maximalwert begrenzt, wodurch ein zu starkes Schwingen des Ventilkörpers und damit verbundener Verschleiß des Steuerventils vermieden werden kann.

Hierbei ist es ferner vorteilhaft, wenn der Begrenzungsstab zumindest in einem oberen Bereich, d.h. von einem den Ventilsitz abgewandten Ende bis in etwas zu einem Eintauchbereich, der dazu eingerichtet ist, in die Bohrung des Ventilkörpers einzutauchen, hin konisch, insbesondere sich in Richtung zu dem Ventilsitz verjüngend, ausgebildet ist, auf diese Weise kann die Steifigkeit des Begrenzungsstab optimiert werden.

Des Weiteren ist es vorteilhaft, dass der Ventilkörper derart ausgebildet ist, dass er eine ringförmige Kontaktfläche mit dem Ventilsitz bildet, wobei der Ventilkörper hierzu bevorzugt an einer dem Ventilsitz zugewandten Fläche oder Stirnfläche eine konische Fläche oder Fase aufweist, die sich insbesondere in Richtung zu dem Ventilsitz hin verjüngt.

Gemäß einem weiteren Aspekt der vorliegenden Offenbarung ist der Ventilsitz in Form einer Ventilsitzscheibe, insbesondere einer in einen ersten Gehäuseabschnitt des Steuerventils eingepressten Ventilsitzscheibe, ausgebildet, wobei die Ventilsitzscheibe an einer dem Ventilkörper zugewandten Stirnfläche eine bevorzugt zu der Kontaktfläche des Ventilkörper analog oder identisch ausgebildete oder geformte Kontaktfläche, insbesondere eine sich konisch nach innen verjüngende Kontaktfläche, aufweist.

Die Ausbildung des Ventilsitzes aus Ventilsitzscheibe bringt ebenfalls die Vorteile mit sich, dass sie einfach herstellbar und wieder in Stand setzbar ist. Ferner kann auf diese Weise der Ventilsitz auf einfache Weise ausgetauscht werden.

Ferner ist es bevorzugt, dass der Ventilkörper aus einem zähen Material, beispielsweise HSS-Stahl (Schnellarbeitsstahl bzw. hochligierter Werkzeugstahl) hergestellt ist, der bevorzugt eine Bruchdehnung von mindestens 5%, weiter bevorzugt von mindestens 10%, aufweist.

Dabei ist es ferner vorteilhaft, wenn zumindest eine der Kontaktflächen (Ventilkörper und/oder Ventilsitz) plattiert ist. Bei den Kontaktflächen handelt es sich um die Unterseite des Ventilkörpers (mit anderen Worten die Stirnseite des Ventilkörpers die dem Ventilsitz zugewandt ist), welche mit dem Ventiltrieb in Kontakt kommt, die am Ventilkörper vorgesehene Kontaktfläche, die dazu eingerichtet ist, mit dem Ventilsitz in Kontakt gebracht zu werden oder zu kommen, und die dazu analog oder identisch am Ventilsitz vorgesehene Kontaktfläche, die dazu eingerichtet ist, mit dem Ventilkörper in Kontakt gebracht zu werden oder zu kommen.

Hierbei ist es vorteilhaft, wenn das Plattieren anhand eines Auftragschweißverfahrens wie beispielsweise dem Plasma-Pulver-Auftragschweißen auch PTA-Verfahren genannt durchgeführt wird. Aus Beschichtungsmaterial kann beispielsweise Nickelmartensit, Wolframkarbid oder Stellite bzw. eine Cobalt-Chrom-Hartlegierung verwendet werden. Nach dem Plattieren werden die somit mit einer Verschleißschutzbeschichtung versehenen Kontaktflächen bevorzugt geschliffen.

Alternativ besteht auch die Möglichkeit, auf einen aus beispielsweise HSS-Stahl hergestellten Grundkörper des Ventilkörpers einen Verschleißring aufzuschrumpfen, der beispielsweise aus Nickelmartensit, Wolframkarbid, Stellite bzw. einer Cobalt-Chrom-Hartlegierung oder einem Verbund aus Keramik und Metall hergestellt ist. Der aufgeschrumpfte Ring kann dann mit der oben beschriebenen abgeschrägten Oberfläche versehen werden, um die ringförmige Kontaktfläche zwischen Ventilsitz und Ventilkörper auszubilden.

Ferner ist es vorteilhaft, wenn der Ventilkörper aus einem zähen vergüteten Material hergestellt ist, dass die Härte des Ventilkörpers von der Kontaktfläche oder Anschlagfläche mit dem Ventiltrieb bis hin zu der dem Ventilsitz abgewandten Seite des Ventilkörpers abnimmt, insbesondere kontinuierlich abnimmt. Hierbei kann die Härte des Ventilkörpers bevorzugt um etwa 20 HRC bis 30 HRC abnehmen.

Der Ventilsitz bzw. die Ventilsitzscheibe ist bevorzugt aus einem sehr harten verschleißfesten Material hergestellt, das stoßfest ist. Auf einen zähen Kern kann hierbei verzichtet werden, da lediglich eine geringe Biegespannung (Bruchbeanspruchung) anliegt.

Der Ventilsitz bzw. die Ventilsitzscheibe kann ebenfalls aus einem Verbund aus Keramik und Metall hergestellt werden.

Des Weiteren ist es bevorzugt, wenn zumindest die Kontaktfläche des Ventilsitzes und/oder des Ventilkörpers gehärtet ist, und bevorzugt die Härte des Ventilkörpers größer als die Härte des Ventilsitzes ist. Auf diese Weise kann eine ausreichend hohe Härte/Festigkeit der Kontaktfläche sichergestellt werden, die notwendig ist, um der hohen Flächenpressung standhalten zu können.

Gemäß einem weiteren Aspekt der vorliegenden Offenbarung, weist der Ventilsitz eine durchgehende Ventilöffnung mit einem Innendurchmesser auf, der zumindest so groß gewählt ist, dass der Ventiltrieb, insbesondere ein Vorsprung des Ventiltriebs, axial zumindest teilweise in die Ventilöffnung des Ventilsitzes eintauchen, hineinreichen oder hineinstehen oder durch diese hindurchreichen oder hindurchstehen kann.

Des Weiteren ist es vorteilhaft, wenn das federlose Steuerventil ferner eine Führungseinrichtung mit einem zweiten Gehäuseabschnitt aufweist, der Teil eines Gehäuses des Steuerventils ist, wobei mittig in dem zweiten Gehäuseabschnitt ein Führungselement eingesetzt oder eingepresst ist, das die axiale oder translatorische Bewegung des Ventilkörpers entlang der Zentralachse führt, wobei das Führungselement bevorzugt aus einem Stahl, insbesondere hochlegierten Werkzeugstahl, hergestellt ist.

Hierbei ist es ferner vorteilhaft, wenn zwischen dem Führungselement, insbesondere einer Durchgangsbohrung des Führungselements, und dem Ventilkörper, insbesondere einer Außenumfangsfläche des Ventilkörpers, ein Spalt vorhanden ist, wobei der Spalt eine Breite von 0,005 mm bis 0,3 mm, bevorzugt 0,01 mm bis 0,2 mm aufweist.

Dabei ist es ferner vorteilhaft, wenn der zweite Gehäuseabschnitt derart gestaltet ist, dass er den Begrenzungsstab zumindest teilweise umschließt, und zusammen mit einem dritten Gehäuseabschnitt des Gehäuses des Steuerventils eine Vorkammer bildet, wobei der zweite Gehäuseabschnitt bevorzugt zumindest mit einer Bohrung versehen ist, die dazu eingerichtet ist, einen Teil der in die Vorkammer eingeleiteten Fluidströmung oder Fluids, zu der in dem Ventilkörper vorgesehenen Bohrung zu leiten.

Des Weiteren ist es vorteilhaft, wenn der erste und zweite Gehäuseabschnitt jeweils zumindest einen Fluidkanal aufweisen, die fluidführend verbunden sind und es der in die Vorkammer eingeleiteten Fluidströmung oder dem eingeleiteten Fluid ermöglichen, zu dem Ventilsitz, insbesondere einer in diesem vorgesehenen Ventilöffnung, zu gelangen.

Des Weiteren betrifft die vorliegende Offenbarung ein Steuerventil, insbesondere federloses Steuerventil, zur Steuerung und/oder Regelung einer Fluidströmung, insbesondere einer Dampfströmung die bevorzugt einen Dampfdrucke im Bereich von 40 bar bis 150 bar aufweist, in einem Kolbendampfmotor, aufweisend: zumindest einen Versorgungsstrang, der dazu eingerichtet ist, einen Kolbendampfmotor mit einem Fluid, insbesondere einem Arbeitsfluid (Heißdampf), zu versorgen, einen Ventilsitz, einen Ventilkörper, der entlang einer Zentralachse des Steuerventils translatorisch bewegbar, insbesondere geführt, ist und dazu eingerichtet ist, zwischen einer geöffneten Stellung, in der das Fluid durch den Versorgungsstrang, insbesondere durch eine Ventilöffnung im Ventilsitz, strömen kann, und einer geschlossenen Stellung, in der das Fluid nicht durch den Versorgungsstrang strömen kann, bewegbar oder schaltbar zu sein, und einen Ventiltrieb, der dazu eingerichtet ist, kraftübertragend mit dem Ventilkörper zusammenzuwirken, um den Ventilkörper zum Öffnen des Steuerventils vom Ventilsitz abzuheben oder entlang der Zentralachse von dem Ventilsitz wegzubewegen, wobei ein stromabwärts des Ventilsitzes, insbesondere stromabwärts der Ventilöffnung, angeordneter Ausströmungsabschnitt des Versorgungsstrangs derart gestaltet oder geformt ist, dass sich dieser bei geöffnetem Steuerventil mit einer in etwa konstanten Spaltbreite in Strömungsrichtung der Fluidströmung (während des Betriebs des Dampfmotors), insbesondere ausgehend von dem Ventilsitz, erstreckt.

Des Weiteren ist es vorteilhaft, wenn der Ausströmungsabschnitt des Versorgungsstrangs, insbesondere ein Spalt der die in etwa konstante Breite aufweist, insbesondere in einer Ebene betrachtet, in welcher die Zentralachse des Steuerventils beinhaltet ist, mit anderen Worten eine Ebene die durch diese Zentralachse hindurchläuft, zwischen dem Ventiltrieb und einem ersten Gehäuseabschnitt des Steuerventils ausgebildet ist, wobei in dem ersten Gehäuseabschnitt bevorzugt der Ventilsitz eingesetzt oder integriert ist.

Ferner ist es bevorzugt, wenn der Ausströmungsabschnitt des Versorgungsstrangs, insbesondere der Spalt mit in etwa konstanter Breite, zwischen einer Außenumfangsfläche des Ventiltriebs und zumindest einem Innenumfangsflächenabschnitt einer in den ersten Gehäuseabschnitt eingebrachten Auslassöffnung ausgebildet ist.

Es ist ebenfalls vorteilhaft, wenn der Ausströmungsabschnitt des Versorgungsstrangs oder der Spalt, gesehen in einer/der Ebene, welche die Zentralachse des Steuerventils beinhaltet, gekrümmt geformt oder ausgebildet sind, insbesondere mit einer in Strömungsrichtung konstanten Krümmung.

Des Weiteren ist es bevorzugt, dass ein Krümmungsradius der Außenumfangsfläche des Ventiltriebs um eine gewünschte Spaltbreite des Spalts größer gewählt ist als ein Krümmungsradius des Innenumfangsflächenabschnitts der Auslassöffnung, wobei die beiden gedachten Zentren der Krümmungsradien einander deckend angeordnet sind. Mit anderen Worten fallen die beiden gedachten Zentren in der die Zentralachse einschließenden Ebene, insbesondere im vollständig geöffneten Zustand des Steuerventils, auf einen gleichen Punkt.

Gemäß einem weiteren Aspekt der vorliegenden Offenbarung liegt die Spaltbreite des Spalts in einem Bereich von 2 bis 6 mm, insbesondere 3 bis 5 mm.

Des Weiteren ist es vorteilhaft, dass der Ventilkörper durch einen Fluiddruck, der bevorzugt durch die zu steuernde und/oder zu regelnde Fluidströmung erzeugt wird, insbesondere den Arbeitsdruck der Dampfströmung, gegen den Ventilsitz, insbesondere in Schließrichtung des Steuerventils, kraftbeaufschlagbar ist oder kraftbeaufschlagt wird.

Ebenfalls ist es vorteilhaft, dass eine Länge des Vorsprungs des Ventiltriebs derart gewählt ist, dass bei vollständig oder zu 100% geöffneter Stellung des Steuerventils, der Vorsprung zumindest teilweise in die Ventilöffnung des Ventilsitzes eintaucht, sodass die beiden Kontaktflächen des Ventiltriebs und des Ventilkörpers in der geöffneten Stellung des Steuerventils innerhalb der Ventilöffnung angeordnet sind.

Es ist ebenfalls vorteilhaft, dass der Ventilkörper einen Vorsprung aufweist, wobei eine Länge des Vorsprungs bevorzugt derart gewählt oder eingestellt ist, dass dieser bei vollständig oder zu 100% geöffneter Stellung des Steuerventils zumindest teilweise in die Ventilöffnung des Ventilsitzes eintaucht, sodass die beiden Kontaktflächen des Ventiltriebs und des Ventilkörpers in der (vollständig) geöffneten Stellung des Steuerventils innerhalb der Ventilöffnung angeordnet sind.

Hierbei ist es ferner bevorzugt, dass der Ventiltrieb eine längliche in etwa zylindrische Form, weiter bevorzugt eine pilzförmige Form, aufweist.

Des Weiteren betrifft die vorliegende Offenbarung ein Steuerventil, insbesondere federloses Steuerventil, zur Steuerung und/oder Regelung einer Fluidströmung, insbesondere einer Dampfströmung die bevorzugt einen Dampfdrucke im Bereich von 40 bar bis 150 bar aufweist, in einem Kolbendampfmotor 1, aufweisend: zumindest einen Versorgungsstrang, der dazu eingerichtet ist, einen Kolbendampfmotor mit einem Fluid, insbesondere einem Arbeitsfluid (Heißdampf), zu versorgen, einen Ventilsitz, einen Ventilkörper, der entlang einer Zentralachse des Steuerventils translatorisch bewegbar ist und dazu eingerichtet ist, zwischen einer geöffneten Stellung, in der das Fluid durch den Versorgungsstrang, insbesondere durch eine Ventilöffnung im Ventilsitz, strömen kann, und einer geschlossenen Stellung, in der das Fluid nicht durch den Versorgungsstrang strömen kann, bewegbar oder schaltbar zu sein, und einen Ventiltrieb mit einer Längsachse LA, der dazu eingerichtet ist, kraftübertragend mit dem Ventilkörper zusammenzuwirken, um den Ventilkörper zum Öffnen des Steuerventils vom Ventilsitz abzuheben oder entlang der Zentralachse von dem Ventilsitz wegzubewegen, wobei der Ventiltrieb an einem dem Ventilsitz zugewandten Ende eine Auflagefläche und an einem dem Ventilsitz abgewandten Ende einen Gewindeabschnitt aufweist, womit der Ventiltrieb in Form einer sogenannten "Spannschraube" ausgeführt ist, und der Ventiltrieb mittels einer Spannmutter, die bevorzugt mit dem Gewindeabschnitt zusammenwirkt, in einen Kolben des Kolbendampfmotors derart einschraubbar oder eingeschraubt ist, dass eine Klemmlänge des Ventiltriebs so gestaltet oder gewählt ist, dass eine thermische Ausdehnung des Klemmbereichs (des Ventiltriebs) mit der Klemmlänge des Ventiltriebs in etwa einer thermischen Ausdehnung des Kolbenbodens mit der Kolbenbodendicke entspricht, in den der Ventiltrieb einschraubbar oder eingeschraubt oder integrierbar oder integriert ist.

Hierbei ist es vorteilhaft, wenn sich die Klemmlänge des Ventiltriebs von der Auflagefläche, mit welcher der Ventiltrieb an/auf dem Kolbenboden oder einer in den Kolbenboden eingelegten oder eingepressten Unterlegscheibe aufliegen kann oder aufliegt bis hin zu der Spannmutter, insbesondere einer dem Kolbenboden zugewandten Seite der Spannmutter, erstreckt.

Des Weiteren ist es bevorzugt, dass das Steuerventil ferner eine Spannbuchse aufweist, die dazu eingerichtet ist, zwischen einer Unterseite des Kolbenbodens, die bevorzugt innerhalb des Kolbens liegt, und der Spannmutter, insbesondere einer dem Kolbenboden zugewandten Seite der Spannmutter, angeordnet zu werden und eine Breite in Richtung der Längsachse des Ventiltriebs aufweist, wodurch insbesondere die Klemmlänge des Ventiltriebs in vorteilhafter Weise verlängert werden kann.

Ferner ist es vorteilhaft, dass zwischen der Auflagefläche des Ventiltriebs und einer Oberseite des Kolbenbodens eine Unterlegscheibe vorgesehen ist, welche bevorzugt in den Kolbenboden eingesetzt oder eingelassen ist und weiter bevorzugt eine Oberflächenhärte aufweist, die höher als die Oberflächenhärte des Kolbens, insbesondere des Kolbenbodens, geformt oder eingestellt ist.

Auf diese Weise kann auf einfache Weise der Ventiltrieb in dem Kolben zentriert werden, insbesondere bevor dieser an dem Kolben durch festziehen der Spannmutter befestigt wird. Hierzu ist es vorteilhaft, wenn zwischen dem Ventiltrieb und der Unterlegscheibe ein Formschluss vorgesehen ist, wobei der Formschluss bevorzugt durch zwei komplementär ausgebildete Radien oder Konusse realisiert ist.

Es ist ebenfalls bevorzugt, den Ventiltrieb und/oder die Unterlegscheibe und/oder die Spannbuchse (65) aus einem Material mit relativ konstantem Wärmeausdehnungskoeffizienten auszubilden.

Gemäß einem weiteren Aspekt der vorliegenden Offenbarung ist die Klemmlänge des Ventiltriebs wenn eine Unterlegscheibe mit einer vorbestimmten Dicke (gemessen in Längsrichtung des Ventiltriebs) vorgesehen ist so gewählt, dass die thermische Ausdehnung (mm/°C) des Ventiltriebs über die Klemmlänge des Ventiltriebs der Summe der thermischen Ausdehnungen (mm/°C) über die Dicke der Unterlegscheibe, einer verbleibenden Kolbenbodendicke, welche sich bevorzugt aus einer Differenz der Kolbenbodendicke und der Dicke der Unterlegscheibe ergibt, und über die Breite der Spannbuchse, falls diese vorgesehen ist, entspricht. Falls keine Spannbuchse vorgesehen ist, wird die Klemmlänge des Ventiltriebs so gewählt, dass die Summe der thermischen Ausdehnungen über die Dicke der Unterlegscheibe und über die verbleibende Kolbenbodendicke der thermischen Ausdehnung des Ventiltriebs über die Klemmlänge des Ventiltriebs entspricht.

Mit anderen Worten ist die Klemmlänge L4 so gewählt, dass sie die folgende Gleichung erfüllt:

$$L4 = \frac{(L1 * \text{Ausdehnungskoeffiz.}_{\text{Scheibe}}) + (L2 * \text{Ausdehnungskoeffiz.}_{\text{Kolbenboden}}) + (L3 * \text{Ausdehnungskoeffiz.}_{\text{Buchse}})}{\text{Ausdehnungskoeffizient.}_{\text{Ventiltrieb}}}$$

Des Weiteren ist es vorteilhaft, wenn die Klemmlänge des Ventiltriebs zu der Kolbenbodendicke des Kolbenbodens des Kolbens in einem Verhältnis von 1.5 bis 2.8, bevorzugt von 1.8 bis 2.2, eingestellt ist oder steht.

Ferner ist es bevorzugt, dass das Steuerventil einen Kolben, insbesondere den oben beschriebenen Kolben, aufweist, wobei der Kolben auf der Unterseite des Kolbenbodens mit einer Auflagefläche versehen ist, die dazu eingerichtet ist, dass die Spannmutter direkt oder indirekt/mittelbar über die Spannbuchse dagegen verspannt wird, wodurch der Ventiltrieb an den Kolben befestigbar oder an diesen anschraubbar ist.

Ferner betrifft die vorliegende Offenbarung einen Kolbendampfmotor, der bevorzugt für die Erzeugung elektrischen Stroms verwendet wird, aufweisend: mindestens einen Zylinder, der einen Arbeitsraum umschließt, einen oder den oben beschriebenen im Arbeitsraum sich zwischen einem oberen Totpunkt und einem unteren Totpunkt entlang einer Zentralachse des Zylinders hin und her beweglichen Kolben, und eines der oben beschriebenen Steuerventil, insbesondere federloses Steuerventil, wobei das Steuerventil zur Steuerung und/oder Regelung einer Fluidströmung, insbesondere einer Dampfströmung, die als Arbeitsfluid(-strömung) des Kolbendampfmotors fungiert, dient.

Der erfindungsgemäße Kolbendampfmotor arbeitet bevorzugt bei einem Verdichtungsverhältnis von 35:1, was zu hohen Kompressionstemperaturen von 500° bis 1000° führt. Die hohen Kompressionstemperaturen führen wie oben bereits geschildert zu hohen thermischen Beanspruchungen der Bauteile des Kolbendampfmotors, insbesondere des (federlosen) Steuerventils sowie des an dem Kolben befestigten Ventiltriebs. Hierbei entspricht bevorzugt der Kompressionsdruck dem Frischdampfdruck, d.h. dem Druck des dem Kolbendampfmotor als Arbeitsmedium zugeführten Fluids. Da der in dem Arbeitsraum vorliegende Kompressionsdruck ebenfalls auf den Ventilkörper wirkt, wird das Ventil nicht nur mechanisch, also durch den Ventiltrieb, sondern auch pneumatisch durch den anliegenden Kompressionsdruck geöffnet.

Des Weiteren ist es bevorzugt, dass der Ventiltrieb des federlosen Steuerventils als Vorsprung des Kolbens ausgebildet ist, der an einem oberen Ende des Kolbens, das dem Steuerventil zugewandt ist, angeordnet ist, wobei der Vorsprung den Ventilkörper von dem Ventilsitz abhebt, wenn sich der Kolben in einem vorbestimmten Bereich oder in der Nähe des oberen Totpunkts befindet, um das Steuerventil zu öffnen.

Hierbei kann der Ventiltrieb in den Kolben einteilig integriert sein, oder kann wie oben im Detail beschrieben als separates Bauteil in den Kolben eingesetzt oder eingeschraubt sein.

Auf diese Weise ist es ermöglicht, auf einen zusätzlichen Ventiltrieb wie beispielsweis ein Piezoelement bzw. einen Piezoantrieb zu verzichten. Ferner erfüllen bekannte Piezoelemente bzw. Piezoantriebe nicht die Anforderungen an Temperaturbeständigkeit und Dauerfestigkeit. Ferner können auf diese Weise kurze Öffnungs- und Schließzeiten erreicht werden, ohne eine extrem hohe Beanspruchung der Ventiltriebkomponenten in Kauf nehmen zu müssen. Dies liegt insbesondere daran, dass die Öffnungs- und Schließkräfte des Steuerventils einerseits durch die Fluidströmung zur Verfügung gestellt werden und andererseits durch den Kolben, insbesondere den Vorsprung des Kolbens eingeleitet werden. Entsprechend werden die Öffnungskräfte von der Pleuelstange und deren Lagerung aufgenommen, welche aufgrund des hohen Drehmoments des Kolbendampfmotors sehr robust ausgelegt sind.

Hierbei ist es ferner vorteilhaft, wenn der Vorsprung eine zumindest teilweise konusförmige Form aufweist, welche insbesondere an der dem Ventilkörper zugewandten Seite eine ebene, insbesondere zur Zentralachse CA senkrecht ausgerichtete, Kontaktfläche aufweist. Auf diese Weise ist es möglich, eine kreisförmige Kontaktfläche zwischen Ventilkörper und Ventiltrieb auszubilden und somit die auftretende Flächenpressung und den damit verbundenen Verschleiß zu reduzieren.

Des Weiteren ist es vorteilhaft, wenn die Kontaktfläche des Ventiltriebs plattiert ist, insbesondere anhand eines Auftragschweißverfahren wie beispielsweise das Plasma-Pulver-Auftragschweißen auch PTA-Verfahren genannt. Hierbei wird der Kolben an seiner Oberseite mit einer konkaven Aussparung versehen, in welche das Beschichtungsmaterial mittels Auftragsscheißen eingebracht wird und anschließend zu einer ebenen Kontaktfläche geschliffen wird. Aus Beschichtungsmaterial kann beispielsweise Nickelmartensit, Wolframkarbid oder Stellite bzw. eine Cobalt-Chrom-Hartlegierung verwendet werden.

Ferner ist es vorteilhaft, wenn der Kolbendampfmotor eine Vorkammer aufweist, die von außen mit Frischdampf versorgbar ist, wobei die Vorkammer eine Öffnung zum Einleiten des Frischdampfs in den Arbeitsraum aufweist, und die Öffnung durch das Steuerventil geöffnet und geschlossen werden kann. Hierbei entspricht die Vorkammer des Kolbendampfmotors der oben beschriebenen Vorkammer des Steuerventils.

Gemäß einem weiteren Aspekt ist der Ventilkörper in Form eines zylindrischen Druckstempels ausgebildet, der translatorisch entlang der Zentralachse des Steuerventils, welche bevorzugt mit einer Zentralachse des Zylinders in etwa fluchtet, beweglich ist, und bevorzugt durch Druck des Frischdampfs, der auf eine dem Ventilsitz abgewandten Seite des Ventilkörpers beaufschlagt ist, gegen den Ventilsitz kraftbeaufschlagt ist.

Ferner betrifft die vorliegende Offenbarung eine Kraft-Wärme-Kopplungsanlage, die einen Dampferzeuger und den oben beschriebenen Kolbendampfmotor aufweist, wobei der Kolbendampfmotor mit einem Generator zur Erzeugung elektrischen Stroms gekoppelt ist.

Des Weiteren betrifft die vorliegende Offenbarung ein Verfahren zum Betreiben des Kolbendampfmotors, wobei das Verfahren bevorzugt zur Steuerung und/oder Regelung einer Fluidströmung zum Antreiben des Kolbendampfmotors dient, umfassend:

Einleiten eines erhitzten und unter Druck stehenden Fluids, insbesondere eines Heißdampfs, in eine Vorkammer des federlosen Steuerventils, und
Druckbeaufschlagen des Ventilkörpers mit einem durch das eingeleitete Fluid erzeugten Fluiddrucks, wodurch der Ventilkörper in Schließrichtung in den Ventilsitz gedrückt oder gegen den Ventilsitz kraftbeaufschlagt wird, wobei zum Öffnen des Steuerventils der Ventiltrieb entgegen der Schließrichtung des Steuerventils in Kontakt mit dem Ventilkörper gebracht wird, wodurch der Ventilkörper gegen den daran anliegenden Fluiddruck in die geöffnete Stellung des Steuerventils bewegt oder geschoben wird.

Ferner ist es vorteilhaft, wenn zum Schließen des Steuerventils der Ventilkörper durch den am Ventilkörper anliegenden Fluiddruck in Schließrichtung des Steuerventils in den Ventilsitz gedrückt oder gegen den Ventilsitz kraftbeaufschlagt wird, wobei der Schließvorgang bevorzugt gegen den sich im Arbeitsraum vorherrschenden, sich insbesondere abbauenden, Arbeitsdruck erfolgt, welcher auf der dem Ventilsitz zugewandten Seite des Ventilkörpers anliegt.

Hierbei erfolgt das Schließen des Steuerventils insbesondere dadurch, dass sich der Ventiltrieb durch Bewegung des Kolbens von dem oberen Totpunkt zu dem unteren Totpunkt, von dem Ventilkörper entfernt und somit der Kontakt zwischen dem Ventilkörper und dem Ventiltrieb, welcher den Ventilkörper von dem Ventilsitz abhebt, löst. Mit anderen Worten sich der Ventilkörper und Ventiltrieb wieder entkoppeln, was eine freie Bewegung des Ventilkörpers ermöglicht.

Des Weiteren betrifft die vorliegende Offenbarung ein Verfahren zum Betreiben des oben beschriebenen Kolbendampfmotors, wobei das Verfahren bevorzugt zur Steuerung und/oder Regelung einer Fluidströmung zum Antreiben des Kolbendampfmotors dient, umfassend:

Einleiten eines erhitzten und unter Druck stehenden Fluids, insbesondere eines Heißdampfs, in eine Vorkammer des Steuerventils,
Öffnen des Steuerventils durch in Kontakt bringen des Ventiltriebs mit dem Ventilkörper entgegen der Schließrichtung des Steuerventils, wodurch der Ventilkörper gegen den daran anliegenden Fluiddruck in die geöffnete Stellung des Steuerventils bewegt oder geschoben wird, und
Auslassen des in die Vorkammer eingeleiteten Fluids durch den einen konstanten Spalt aufweisenden Ausströmungsabschnitt, insbesondere mit einer in etwa konstanten Entspannungsrate.

Hierbei ist im Rahmen der vorliegenden Offenbarung unter dem Begriff "Entspannungsrate" der Wert zu verstehen, wie schnell sich das unter Druck stehende Fluid oder Medium entspannt, mit anderen Worten sich der Druck reduziert ($\Delta$P/mm). Dabei ist die Entspannungsrate maßgeblich von der Vergrößerung des Durchströmungsquerschnitts des Ausströmungsabschnitt abhängig.

Des Weiteren ist es vorteilhaft, dass der Ventilkörper durch einen Fluiddruck des in die Vorkammer eingeleiteten Fluids in Schließrichtung des Steuerventils druckbeaufschlagt wird, wodurch der Ventilkörper in Richtung des Ventilsitzes, insbesondere in die geschlossene Stellung des Steuerventils kraftbeaufschlagt wird.

Ferner ist es bevorzugt, dass zum Schließen des Steuerventils der Ventilkörper durch den am Ventilkörper anliegenden Fluiddruck in Schließrichtung des Steuerventils in den Ventilsitz gedrückt oder gegen den Ventilsitz kraftbeaufschlagt wird, wobei der Schließvorgang bevorzugt gegen den sich im Arbeitsraum vorherrschenden, sich insbesondere durch die Nachuntenbewegung des Kolbens abbauenden, Arbeitsdruck erfolgt, welcher auf der dem Ventilsitz zugewandten Seite des Ventilkörpers anliegt.

**Kurze Beschreibung der Figuren**

Fig. 1 zeigt ein schematisches Diagramm einer Kraft-Wärme-Kopplungsanlage,
Fig. 2 zeigt eine schematische Schnittdarstellung eines Kolbendampfmotors gemäß einer Ausführungsform der vorliegenden Erfindung, wobei das Steuerventil in der geschlossenen Position ist und der Kolben sich im unteren Totpunkt befindet,
Fig. 3 zeigt eine vergrößerte Teilansicht der schematischen Schnittdarstellung von Fig. 2, um die Ausbildung des Steuerventils zu verdeutlichen, wobei sich der Kolben in der Nähe des oberen Totpunkts befindet, jedoch das Steuerventil noch geschlossen ist,
Fig. 4 zeigt eine vergrößerte Teilansicht der schematischen Schnittdarstellung von Fig. 2, um die Ausbildung des Steuerventils zu verdeutlichen, wobei sich das Steuerventil im geöffneten Zustand befindet,
Fig. 5 zeigt eine vergrößerte Teilansicht der schematischen Schnittdarstellung von Fig. 4, um die Kernbauteile der vorliegenden Offenbarung detaillierter zu beschreiben, und
Fig. 6 zeigt eine vergrößerte Teilansicht des in den Figuren 3 bis 4 gezeigten Ventiltriebs und dessen Einbausituation.

**Detaillierte Beschreibung der bevorzugten Ausführungsformen**

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden. Hierbei wird noch darauf verwiesen, dass die oben beschriebenen Merkmale der unterschiedlichen Ausführungsformen soweit nicht widersprüchlich zueinander miteinander kombiniert werden können.

Dabei sind in den verschiedenen Figuren gleiche oder entsprechende Elemente jeweils mit den gleichen oder ähnlichen Bezugszeichen bezeichnet.

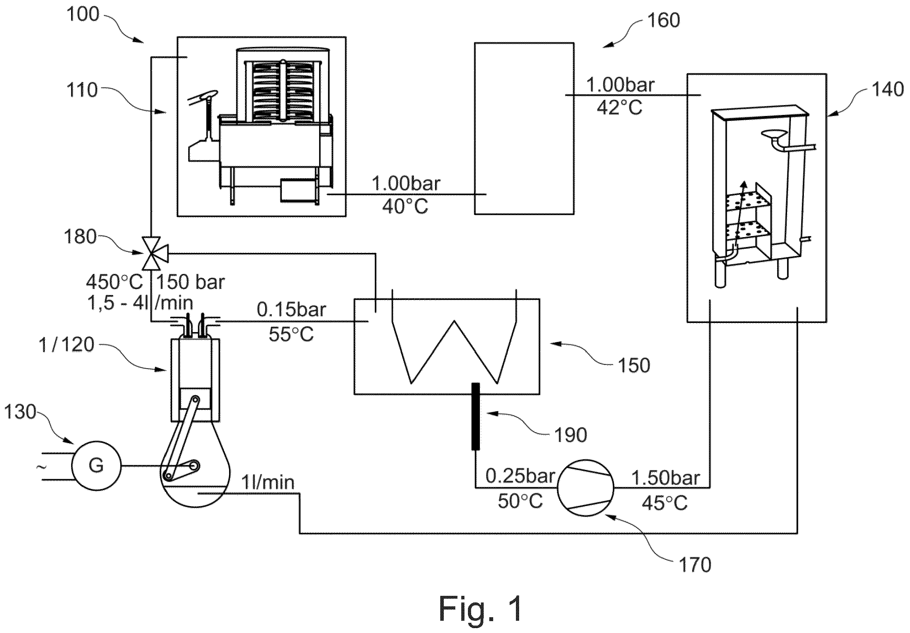

Fig. 1 zeigt ein schematisches Diagramm einer Kraft-Wärme-Kopplungsanlage (KWK-Anlagen). Die gezeigte KWK-Anlage 100 besteht aus einem Dampferzeuger 110, welcher über ein Ventil 180 mit einem Einlass eines Kolbendampfmotors 1, 120 verbunden ist, welcher einen Generator 130 zur Erzeugung von Strom antreibt. Wie oben bereits erläutert, ist es zur Feinabdichtung des Kolbendampfmotors 1, 120 notwendig, diesen mit Öl zu versorgen, welches sich während des Betriebs des Kolbendampfmotors 1, 120 jedoch mit dem entspannten Wasserdampf vermischt und mit diesem ausgegeben wird. Aus diesem Grund weist der vom Kolbendampfmotor 1, 120 ausgegebene entspannte Wasserdampf eine relativ große Menge an Öl auf.

Dem Kolbendampfmotor 1, 120 ist ein Kondensator 150 zur Kondensation des entspannten Wasserdampfs, welcher einen Druck von ca. 0,15 bar und eine Temperatur von ca. 55°C aufweist, wenn dieser den Kolbendampfmotor 120 verlässt, nachgeschalten.

Der kondensierte Wasserdampf, welcher weiterhin einen großen Anteil an Öl enthält, wird über eine Wassersäule 190, welche den Druck des kondensierten Wasserdampfs auf ca. 0,25 bar erhöht, einer Kondensat-Absaugpumpe (bzw. Zirkulationspumpe) 170, insbesondere Kolbenpumpe, zugeführt bzw. von dieser angesaugt. Die Kondensat-Absaugpumpe erhöht den Druck des kondensierten Wasserdampfs bzw. des nun vorliegenden Öl-Wassers-Gemischs auf ungefähr 1,50 bar und fördert das Öl-Wasser-Gemisch zu einer Vorrichtung 140 zum Trennen von Öl und Wasser.

Wie der Figur 1 ferner entnommen werden kann, wird das getrennte bzw. abgeschiedene Öl zurück zu einem Kurbelwellenraum des Kolbendampfmotors geleitet oder zur Feinabdichtung in den Kolbendampfmotor eingespritzt und das gereinigte Wasser an einen Speisewassertank 160 geleitet, welcher das aufbereitete bzw. gereinigte Wasser dem Dampferzeuger 110 erneut zur Dampferzeugung zur Verfügung stellt, womit der Kreislauf geschlossen ist.

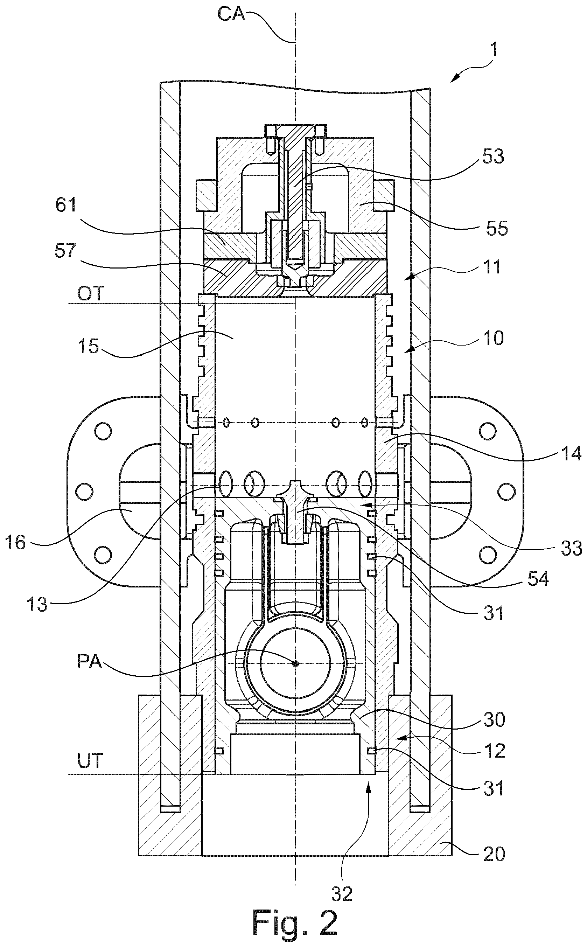

Figur 2 zeigt eine schematische Schnittdarstellung eines Kolbendampfmotors 1, der mit einem Steuerventil 50 gemäß einer Ausführungsform der vorliegenden Erfindung ausgestattet ist. Der gezeigte Kolbendampfmotor 1 weist einen Zylinder 10 der ein oberes Ende 11 und ein unteres Ende 12 aufweist. Am unteren Ende 12 ist der Zylinder 10 mit einem Kurbelgehäuse 20 verbunden. Mehrere Auslassöffnungen 13 sind in Umfangsrichtung in der Zylinderwand/Arbeitsraumwand 14 des Zylinders 10 vorgesehen. Die Auslassöffnungen 13 verbinden eine Zylinderkammer bzw. einen Arbeitsraum 15 mit einer Ringkammer 16, um verbrauchten Dampf von dem Arbeitsraum 15 abzulassen bzw. abzuführen. Die Auslassöffnungen 13 sind nahe einem unteren Totpunkt UT eines Kolbens 30 angeordnet, welcher sich in der gezeigten Ansicht im unteren Totpunkt UT befindet.

Der Kolben 30 ist translatorisch entlang einer Mittelachse CA des Zylinders 10 zwischen dem unteren Totpunkt UT und einem oberen Totpunkt OT beweglich. Der Kolben 30 ist über eine nichtdargestellte Kolbenverbindungsstange oder Kolbensteuerungsstange mit einer nicht gezeigten Kurbelwelle verbunden, die in dem Kurbelgehäuse 20 untergebracht ist. Der Kolben 30 weist an seinem unteren Ende 32 einen Dichtring 31 und an seinem oberen Ende 33 mehrere Dichtringe 31 auf.

Der Motor umfasst ferner eine Zylinderkopfeinheit 40, wobei die Zylinderkopfeinheit 40 einen ersten Gehäuseabschnitt 57, einen zweiten Gehäuseabschnitt 61 und einen dritten Gehäuseabschnitt 55 aufweist, welche einteilig oder mehrteilig ausgebildet sein können, wobei der zweite Gehäuseabschnitt 61 und der dritte Gehäuseabschnitt 55 zusammen eine Vorkammer 56 (Dampfkammer) formen oder definieren. Hierbei können der zweite Gehäuseabschnitt 61 und der dritte Gehäuseabschnitt 55 miteinander verschweißt sein. Die Vorkammer 56 ist über eine Öffnung bzw. Ventilöffnung 58 mit dem Arbeitsraum 15 fluidführend verbunden. Die Öffnung kann mittels eines Steuerventils 50, das einen Ventilsitz 51 und einen Ventilkörper 52 aufweist, geöffnet und verschlossen werden, womit das Einströmen von Frischdampf (Heißdampf, der unter Hochdruck steht) von der Vorkammer 56 in den Arbeitsraum 15 gesteuert werden kann. In Figur 2 befindet sich das Steuerventil 50 im geschlossenen Zustand, d.h., der Ventilkörper 52 wird gegen den Ventilsitz 51 gedrückt, um den Durchfluss von Frischdampf in den Arbeitsraum 15 zu unterbinden.

Der Ventilkörper 52 ist mittels einer Führungseinrichtung 60, welche den zweiten Gehäuseabschnitt 61 umfasst, entlang der der Zentralachse CA translatorisch geführt, hierzu weiset die Führungseinrichtung ein Führungselement 62, insbesondere eine Führungsbuchse, auf. Ferner weist die dargestellte Ausführungsform eine Hubbegrenzungseinrichtung auf, die mittels eines Begrenzungsstab 53 eine Öffnungsbewegung oder Hubbewegung des Ventilkörpers begrenzt, wobei eine Längsachse des Begrenzungsstabs parallel, insbesondere konzentrisch, zu der Zentralachse CA angeordnet ist.

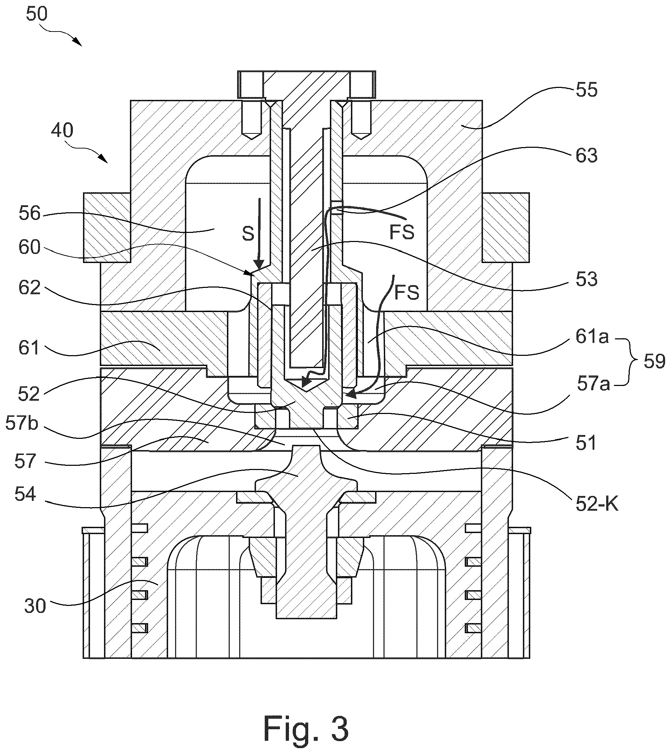

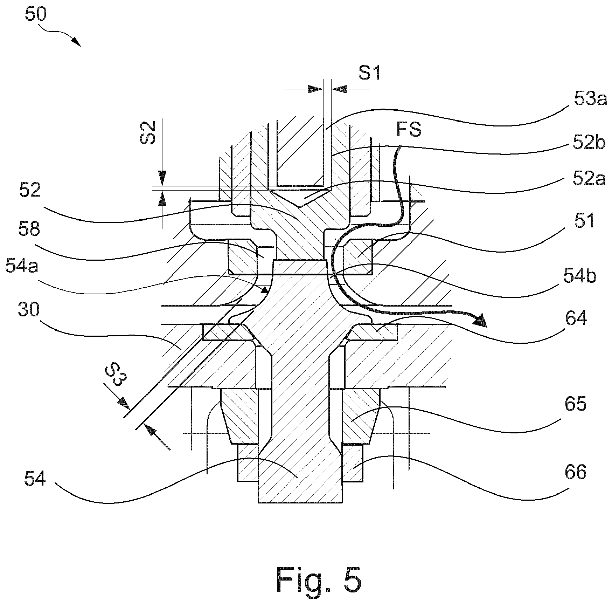

Figur 3 zeigt eine vergrößerte Teilansicht der schematischen Schnittdarstellung von Figur 2, um die Ausbildung des federlosen Steuerventils 50, insbesondere des Ventilsitzes 51, des Ventilkörpers 52 sowie der Hubbegrenzungseinrichtung weiter zu verdeutlichen. Wie der Figur 3 entnommen werden kann, ist der Ventilkörper 52 mit einer Sackbohrung 53 versehen, welche an einer dem Ventilsitz 51 abgewandten Seite des Ventilkörpers 52 vorgesehen ist. Hierbei ist der Begrenzungsstab 53 derart gestaltet, dass er in jeglicher Stellung des Ventilkörpers 52 in die Sackbohrung 53 eintaucht, wobei zwischen einer Außenumfangsfläche 53a des Begrenzungsstabs 53 und einer Innenumfangsfläche 52b der Bohrung 52a, ein Spalt S1 (siehe Fig. 5), insbesondere ein Luftspalt, ausgebildet ist.

Der Figur 3 kann ferner entnommen werden, dass der Ventilkörper 52 an einem dem Ventilsitz 51 zugewandten axialen Ende eine Kontaktfläche 52-K aufweist, die an einem Vorsprung des Ventilkörpers 52 ausgebildet ist und dazu eingerichtet ist, mit einem Ventiltrieb 54 kraftübertragend zusammenzuwirken, um den Ventilkörper 52 beim Öffnen des Steuerventils 50 von dem Ventilsitz 51 abzuheben oder entlang der Zentralachse CA von dem Ventilsitz 51 wegzubewegen.

Führt während des Betriebs der Kolben 30 seine Auf- und Abbewegung zwischen dem oberen und dem unteren Totpunkt durch, nähert sich bei der Aufbewegung der an der Kolbenfläche angebrachte Ventiltrieb 54 dem Ventilsitz 51 an. Wie oben beschrieben steht im geschlossenen Zustand des Steuerventils der Vorsprung des Ventilkörpers in die Ventilöffnung 58 hinein. Der Ventiltrieb 54 ist ebenfalls mit einem Vorsprung 54a ausgebildet, der ebenfalls so geformt ist, dass er beim Erreichen des oberen Totpunkts in die Ventilöffnung 58 eintaucht und somit eine Kontaktfläche (Stirnfläche) des Ventiltriebs 54 mit der Kontaktfläche 52-K des Ventilkörpers 52 in Kontakt kommt und dadurch den Ventilkörper 52 von dem Ventilsitz 51 abhebt, wodurch das Steuerventil geöffnet wird. Bewegt sich nun der Kolben 30 von dem oberen Totpunkt in Richtung unteren Totpunkt, bewegt sich der Ventiltrieb 54 aus der Ventilöffnung 58 heraus und ermöglicht es somit dem Ventilkörper 52 wieder mit dem Ventilsitz 51 in Kontakt zu gelangen und somit das Steuerventil 50 zu schließen.

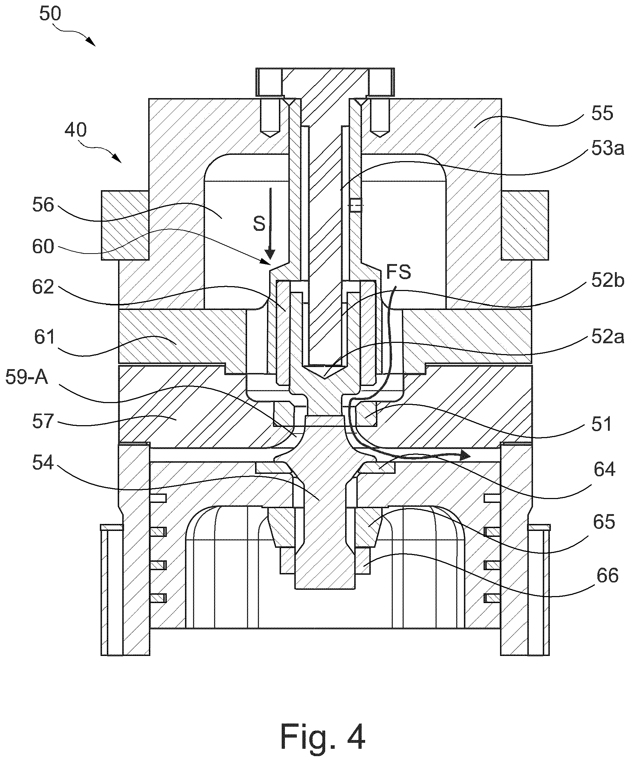

Figur 4 zeigt eine vergrößerte Teilansicht der schematischen Schnittdarstellung von Fig. 2, um die Ausbildung des federlosen Steuerventils 50 weiter zu verdeutlichen, wobei sich das Steuerventil im geöffneten Zustand, insbesondere vollständig geöffneten Zustand, befindet. Mit anderen Worten ist der Ventilkörper 52 durch den Ventiltrieb 54 maximal angehoben.

Wie der Figur 4 entnommen werden kann, ist der Begrenzungsstab 53 derart gestaltet, dass in der dargestellten (vollständig) geöffneten Stellung des Steuerventils 50, d.h. wenn der Ventilkörper 52 maximal von dem Ventilsitz 51 beabstandet ist, ein Spalt S2 zwischen dem Ventilkörper 52 und dem Führungsstab 53 bestehen bleibt. Mit anderen Worten ist die Länge des Begrenzungsstabs 53 so gewählt, dass der Ventilkörper 52 im Normalbetrieb auch in der vollkommen geöffneten Stellung nicht mit dem Begrenzungsstab 53 in Kontakt kommt. Mit anderen Worten ist wie oben bereits erläutert, die Länge des Begrenzungsstabs 53 so gewählt, dass auch bei einem leichten Überschwingen des Ventilkörpers 52 dieser nicht mit dem Begrenzungsstab 53 in Kontakt kommt. Wird jedoch in den Ventilkörper 52 ein größerer Impuls als normal eingeleitet, wird ein übermäßiges Schwingen bzw. Überschwingen des Ventilkörpers 52 durch den Begrenzungsstab 53, begrenzt.

Ferner zeigen die Figuren 3 und 4, dass der Ventilkörper 52 eine ringförmige Kontaktfläche mit dem Ventilsitz 51 bildet, wobei der Ventilkörper 52 hierzu an einer dem Ventilsitz 51 zugewandten Fläche oder Stirnfläche eine konische Fläche bzw. Fase aufweist, die sich insbesondere in Richtung zu dem Ventilsitz 51 hin verjüngt. In der dargestellten Ausführungsform ist die ringförmige Kontaktfläche an einem Absatz des Ventilkörpers 51 vorgesehen, insbesondere an einem Absatz, an dem der Ventilkörper von einem Hauptkörper in einen Vorsprung übergeht.

Des Weiteren ist in den Figuren 3 und 4 jeweils die Fluidströmung durch einen Pfeil FS kenntlich gemacht. Da in der Figur 3 das Steuerventil geschlossen ist, kann die Fluidströmung FS lediglich bis zu dem Ventilsitz 51 hin sich ausbreiten, jedoch nicht durch die in dem Ventilsitz 51 vorgesehene Ventilöffnung hindurch strömen. Andererseits kann sich die Fluidströmung FS noch durch die Bohrung 63 bis hin zu der in den Ventilkörper 52 vorgesehenen Sackbohrung 52a hin ausbreiten und dadurch den Ventilkörper 52 mit einer Schließkraft in Schließrichtung S des Steuerventils hin kraftbeaufschlagen. In Figur hingegen, wo das Steuerventil 50 geöffnet ist, kann das Fluid durch die Ventilöffnung 58 in den Arbeitsraum 15 strömen.

Wie den Figuren 3 und 4 ebenfalls entnommen werden kann, ist der Ventilsitz 51 aus einer einfachen Ventilsitzscheibe ausgebildet, welche in den ersten Gehäuseabschnitt 57 eingesetzt ist. Dadurch ist es möglich, den Ventilsitz 51 nach längerer Nutzung und damit verbundenem Verschleiß einfach auszutauschen. Hierbei kann der Ventilsitz 51 durch einfaches Nachschleifen zur Wiederverwendung in Stand gesetzt werden.

Wie den Figuren 3 und 4 weiter entnommen werden kann, ist hierzu die Zylinderkopfeinheit 40 mehrteilig ausgebildet, insbesondere mit dem ersten Gehäuseabschnitt 57, dem zweiten Gehäuseabschnitt 61 und dem dritten Gehäuseabschnitt 55, welche als separate Bauteile ausgebildet sind. Entsprechend kann bei der Instandhaltung des Ventilsitzes 51 der dritte Gehäuseabschnitt 55 einfach von dem ersten Gehäuseabschnitt 57 abgenommen werden, wodurch der Ventilsitz 51 zugänglich gemacht wird.

Die Figur 4 zeigt ferner, dass der Ventilsitz 51 eine durchgehende Ventilöffnung mit einem Innendurchmesser $D_1$ aufweist, der zumindest so groß gewählt ist, dass der Ventiltrieb 54, insbesondere ein Vorsprung 54a des Ventiltriebs 54, axial in die Ventilöffnung des Ventilsitzes 51 zumindest teilweise eintauchen kann.

Des Weiteren ist der zweite Gehäuseabschnitt 61 derart gestaltet, dass er den Begrenzungsstab 53 teilweise umschließt, wobei der zweite Gehäuseabschnitt 61 mit der Bohrung 63 versehen ist, die dazu eingerichtet ist, einen Teil der in die Vorkammer 56 eingeleiteten Fluidströmung (Fluids) zu der in dem Ventilkörper 52 vorgesehenen Bohrung 52a zu leiten. Ferner sind der erste und der zweite Gehäuseabschnitt 57, 61 jeweils zumindest mit einem Fluidkanal 57a, 61a versehen, die fluidführend miteinander verbunden sind und es der in die Vorkammer 56 eingeleiteten Fluidströmung ermöglichen, zu dem Ventilsitz 51, insbesondere der in diesem vorgesehenen Ventilöffnung 58 zu gelangen. Die genannten Fluidkanäle 57a, 61a bilden Teil eines Versorgungsstrang 59, der dazu eingerichtet ist, den Kolbendampfmotor 1 mit dem in die Vorkammer 56 eingeleiteten Fluid (Arbeitsmedium) zu versorgen.

Figur 5 zeigt eine vergrößerte Teilansicht der schematischen Schnittdarstellung von Figur 4, um die Kernbauteile der vorliegenden Offenbarung detaillierter zu beschreiben. Wie die Figuren 3 bis 5, insbesondere jedoch die Figur 5, verdeutlichen, ist der Versorgungsstrang 59 derart geformt, dass sich ein stromabwärts des Ventilsitzes 51, insbesondere stromabwärts der Ventilöffnung 58, angeordneter Ausströmungsabschnitt 58-A des Versorgungsstrang 59 sich bei geöffnetem Steuerventil 50, mit anderen Worten wenn der Ventiltrieb 54 in seiner höchsten Stellung (dem Ventilsitz 51 am nächsten) angeordnet ist, mit einer in etwa konstanten Spaltbreite in Strömungsrichtung der Fluidströmung FS erstreckt. Wie der Figur 5 weiter entnommen werden kann, ist der stromabwärts der Ventilöffnung 58 ausgebildete Ausströmungsabschnitt 58-A zwischen dem Ventiltrieb 54, insbesondere dessen Außenumfangsfläche 54b, und einem Innenumfangsflächenabschnitt einer in den ersten Gehäuseabschnitt 57 eingebrachten Auslassöffnung 57b geformt. Dadurch das der Spalt S3 (siehe Fig. 5) von dem Ende der Ventilöffnung 58 bis zu einem Ende der Auslassöffnung 57b hin in etwa konstant ist, vergrößert oder erweitert sich ein Durchströmungsquerschnitt oder Strömungsquerschnitt des Ausströmungsabschnitt 58-A ebenfalls in etwa konstant. Entsprechend ist wie oben bereits geschildert die Entspannungsrate des durch den Ausströmungsabschnitt 58-A strömenden Fluids in etwa konstant.

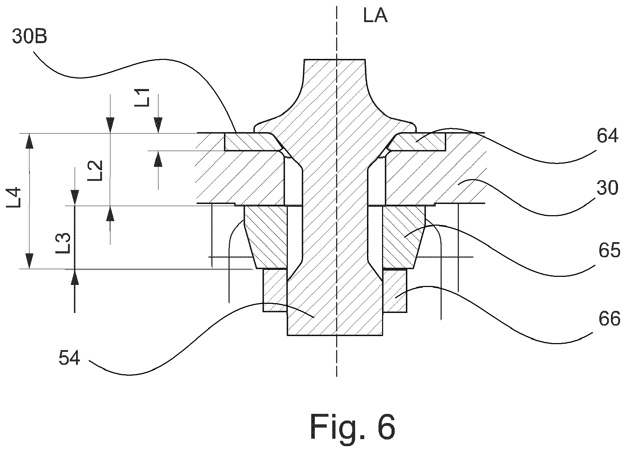

Figur 6 zeigt eine vergrößerte Teilansicht des in den Figuren 3 bis 4 gezeigten Ventiltriebs 54 und dessen Einbausituation im Kolben 30 des Kolbendampfmotors 1.

Wie der Figur 6 entnommen werden kann und bereits erwähnt, weist der Ventiltrieb 54 eine längliche zylindrische beziehungsweise pilzförmige Form bzw. Kontur auf, die sich entlang einer Längsachse LA, die mit der Zentralachse CA des Steuerventils 50 fluchtet, erstreckt. Der Ventiltrieb 54 weist an einem dem Ventilsitz zugewandten Ende (in Figur 6 oben) eine Auflagefläche auf, mit welcher der Ventiltrieb 54 in der dargestellten Ausführungsform gegen eine in den Kolben 30 des Kolbendampfmotors 1 eingesetzte Unterlegscheibe 64 gespannt ist. Der Einsatz einer Unterlegscheibe 64 dient zur Vergrößerung der Auflagefläche auf dem Kolben 30, insbesondere dessen Kolbenboden 30B, um dadurch die auf den Kolbenboden 30B wirkende Flächenpressung zu verringern.

Zur Aufnahme der Unterlegscheibe 64 weist der Kolben 30 in dieser Ausführungsform eine Vertiefung auf, in welche die Unterlegscheibe 64 eingepresst ist und vorteilhafterweise mit der Oberfläche des Kolbenbodens 30B bündig abschließt. Der Kolbenboden 30B weist auf einer innerhalb des Kolbens 30 liegenden Unterseite eine Auflagefläche auf, an welcher eine Spannbuchse 65 anliegt. Der Kolbenboden 30B sowie die Spannbuchse 65 sind jeweils mit einer fluchtenden Durchgangsbohrung versehen, durch welche der Ventiltrieb so hindurchsteht, dass ein auf der dem Ventilsitz 51 abgewandten Seite oder Ende des Ventiltriebs 54 vorgesehener Gewindeabschnitt freiliegt oder aus der Durchgangsbohrung der Spannbuchse 65 herausreicht. Auf diese Weise kann mittels einer Spannmutter 66 die Anlagefläche des Ventiltriebs 54 gegen den Kolbenboden 30B gespannt werden und der Ventiltrieb 54 fest mit dem Kolben 30 verbunden oder verschraubt werden.

Um hierbei thermische Spannungen oder Verspannungen zwischen dem Ventiltrieb 54 und dem Kolben 30 zu vermeiden ist eine Klemmlänge L4 des Ventiltriebs, die sich von der Auflagefläche, mit welcher der Ventiltrieb 54 an/auf der in dem Kolbenboden 30B eingepressten Unterlegscheibe 64 aufliegt bis hin zu der Spannmutter 66, insbesondere einer dem Kolbenboden 30B zugewandten Seite oder Stirnfläche der Spannmutter 66, erstreckt, so gewählt, dass eine thermische Ausdehnung in mm/°C des Ventiltriebs 54 über die Klemmlänge L4 der Summe der thermischen Ausdehnungen mm/°C der Unterlegscheibe 64 mit der die Dicke L1, einer verbleibenden Kolbenbodendicke L2', welche sich aus einer Differenz der Kolbenbodendicke L2 und der Dicke L1 der Unterlegscheibe 64 ergibt, wenn die Unterlegscheibe 64 bündig mit der Oberfläche des Kolbenbodens 30B ist, und der Breite L3 der Spannbuchse 65 entspricht.

Aus der vorhergehenden Beschreibung erkennt der Fachmann, dass verschiedene Modifikationen und Variationen der Vorrichtung und des Verfahrens der Erfindung durchgeführt werden können, ohne den Umfang der Erfindung zu verlassen. Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können. Deshalb wird der Umfang der Erfindung durch die folgenden Ansprüche gekennzeichnet.

**Patentansprüche**

1. Federloses Steuerventil (50) zur Steuerung und/oder Regelung einer Fluidströmung, insbesondere einer Dampfströmung die bevorzugt einen Dampfdrucke im Bereich von 10 bar bis 180 bar aufweist, in einem Kolbendampfmotor (1), umfassend:

   einen Ventilsitz (51), und
   einen Ventilkörper (52), der entlang einer Zentralachse (CA) des Steuerventils (50) translatorisch geführt ist und dazu eingerichtet ist, gegen den Ventilsitz (51) in Schließrichtung (S) des Steuerventils (50) kraftbeaufschlagt zu werden, wobei der Ventilkörper (52) zwischen einer geöffneten Stellung, in der ein Fluid strömen kann, insbesondere durch eine Ventilöffnung im Ventilsitz (51) strömen kann, und einer geschlossenen Stellung, in der kein Fluid strömen kann, bewegbar oder schaltbar ist,
   **dadurch gekennzeichnet, dass** der Ventilkörper (52) durch einen Fluiddruck, der bevorzugt durch die zu steuernde und/oder zu regelnde Fluidströmung erzeugt wird, gegen den Ventilsitz (51) kraftbeaufschlagbar ist.

2. Federloses Steuerventil (50) nach Anspruch 1, bei dem das Steuerventil (50) ohne ein Federelement, insbesondere eine Feder, das dazu eingerichtet ist, den Ventilkörper in Schließrichtung (S) des Steuerventils (50) gegen den Ventilsitz (51) mit einer Schließkraft ($F_S$) zu beaufschlagen, ausgebildet ist.

3. Federloses Steuerventil (50) nach Anspruch 1 oder 2, ferner umfassend eine Hubbegrenzungseinrichtung, die dazu eingerichtet ist, eine nach oben Bewegung des Ventilkörpers (52) oder eine Bewegung entgegengesetzt zu der Schließrichtung (S) des Ventilkörpers (52) zu begrenzen, wobei die Bewegung des Ventilkörpers (52) bevorzugt in einem Bereich von 1 mm bis 6 mm, bevorzugt 2 mm bis 3 mm, liegt.

4. Federloses Steuerventil (50) nach Anspruch 3, bei dem die Hubbegrenzungseinrichtung einen Begrenzungsstab (53) aufweist, der dazu eingerichtet ist, die Öffnungsbewegung oder Hubbewegung des Ventilkörpers (52) entgegen der Schließrichtung (S) zu begrenzen, wobei eine Längsachse des Begrenzungsstabs (53) parallel, insbesondere konzentrisch, zu der Zentralachse (CA) angeordnet ist oder verläuft.

5. Federloses Steuerventil (50) nach einem der vorhergehenden Ansprüche, bei dem der Ventilkörper (52) als ein Vollkörper oder als ein zumindest teilweise hohlförmig geformter Körper ausgebildet ist, wobei wenn der Ventilkörper (52) zumindest teilweise hohlförmig geformt ist, bevorzugt eine Bohrung (52a), insbesondere eine Sackbohrung (53), in dem Ventilkörper (52) ausgebildet ist, wobei die Bohrung (52a) bevorzugt an einer dem Ventilsitz (51) abgewandten Seite des Ventilkörpers (52) vorgesehen ist.

6. Federloses Steuerventil (50) nach Anspruch 5 und zumindest Anspruch 4, wobei der Begrenzungsstab (53) derart gestaltet ist, dass dieser in die Bohrung (52a) zumindest abschnittsweise eintaucht, wobei zwischen dem Begrenzungsstab (53) und der in den Ventilkörper (52) eingebrachten Bohrung (52a), insbesondere einer Außenumfangsfläche (53a) des Begrenzungsstabs (53) und einer Innenumfangsfläche (52b) der Bohrung (52a), ein Spalt (S1), insbesondere ein Luftspalt, ausgebildet ist.

7. Federloses Steuerventil (50) nach einem der vorhergehenden Ansprüche, bei dem der Ventilkörper (52) an einem dem Ventilsitz (51) zugewandten axialen Ende eine Kontaktfläche (52-K) aufweist, die bevorzugt an einem Vorsprung des Ventilkörpers (52) ausgebildet ist, und dazu eingerichtet ist, mit einem Ventiltrieb (54) kraftübertragend zusammenzuwirken, um den Ventilkörper (52) von dem Ventilsitz (51) abzuheben, insbesondere gegen den daran anliegenden Fluiddruck, um dadurch das Steuerventil (50) zu öffnen, wobei der Ventiltrieb (54) und der Ventilkörper (22) bevorzugt entkoppelt ausgebildet sind.

8. Federloses Steuerventil (50) nach einem der vorhergehenden Ansprüche, bei dem der Ventilkörper (52) derart ausgebildet ist, dass er eine ringförmige Kontaktfläche mit dem Ventilsitz (51) bildet, wobei der Ventilkörper (52) hierzu bevorzugt an einer dem Ventilsitz (51) zugewandten Fläche oder Stirnfläche eine konische Fläche oder Fase aufweist, die sich insbesondere in Richtung zu dem Ventilsitz (51) hin verjüngt.

9. Federloses Steuerventil (50) nach einem der vorhergehenden Ansprüche, ferner umfassend ein Führungseinrichtung (60) mit einem zweiten Gehäuseabschnitt (61), der Teil eines Gehäuses des Steuerventils (50) ist, wobei mittig in dem zweiten Gehäuseabschnitt (61) ein Führungselement (62) eingesetzt oder eingepresst ist, das die axiale Bewegung des Ventilkörpers (52) entlang der Zentralachse (CA) führt.

10. Federloses Steuerventil (50) nach zumindest Anspruch 9 und Anspruch 4, bei dem der zweite Gehäuseabschnitt (61) derart gestaltet ist, dass er den Begrenzungsstab (53) zumindest teilweise umschließt, und zusammen mit einem dritten Gehäuseabschnitt (55) des Gehäuses des Steuerventils (50) eine Vorkammer (56) bildet, wobei der zweite Gehäuseabschnitt (61) bevorzugt zumindest mit einer Bohrung (63) versehen ist, die dazu eingerichtet ist, einen Teil der in die Vorkammer (56) eingeleiteten Fluidströmung, zu der in dem Ventilkörper (52) vorgesehenen Bohrung (52a) zu leiten.

11. Kolbendampfmotor (1) der bevorzugt für die Erzeugung elektrischen Stroms verwendet wird, umfassend:

   mindestens einen Zylinder (10), der einen Arbeitsraum (15) umschließt,
   einen im Arbeitsraum (15) zwischen einem oberen Totpunkt (OT) und einem unteren Totpunkt (UT) entlang einer Zentralachse (CA) des Zylinders (10) hin und her beweglichen Kolben (30), und
   ein federloses Steuerventil (50) nach einem der vorhergehenden Ansprüche 1 bis 11, wobei das Steuerventil (50) zur Steuerung und/oder Regelung einer Fluidströmung, insbesondere einer Dampfströmung die als Arbeitsfluid des Kolbendampfmotors fungiert, dient.

12. Kolbendampfmotor (1) nach Anspruch 11, bei dem der Ventiltrieb (54) des federlosen Steuerventils (50) als Vorsprung des Kolbens (30) ausgebildet ist, der an einem oberen Ende (33) des Kolbens, das dem Steuerventil (50) zugewandt ist, angeordnet ist, wobei der Vorsprung den Ventilkörper (52) von dem Ventilsitz (51) abhebt, wenn sich der Kolben (30) in einem vorbestimmten Bereich / in der Nähe des oberen Totpunkts (OT) befindet, um das Steuerventil (50) zu öffnen.

13. Kolbendampfmotor (1) nach Anspruch 11 oder 12, wobei der Ventilkörper (52) in Form eines zylindrischen Druckstempels ausgebildet ist, der translatorisch entlang der Zentralachse (CA) des federlosen Steuerventils (50), welche bevorzugt mit einer Zentralachse (CA) des Zylinders (10) in etwa fluchtet, beweglich ist, und durch Druck des Frischdampfs, der auf eine dem Ventilsitz (51) abgewandten Seite des Ventilkörpers (52) beaufschlagt ist, gegen den Ventilsitz (51) kraftbeaufschlagt ist.

14. Kraft-Wärme-Kopplungsanlage, umfassend:

einen Dampferzeuger (110), und
einen Kolbendampfmotor (1) nach einem der vorhergehenden Ansprüche 11 bis 13, wobei der Kolbendampfmotor mit einem Generator (130) zur Erzeugung elektrischen Stroms gekoppelt ist.

15. Verfahren zum Betreiben des Kolbendampfmotors (1) nach einem der vorhergehenden Ansprüche 11 bis 13, wobei das Verfahren bevorzugt zur Steuerung und/oder Regelung einer Fluidströmung zum Antreiben des Kolbendampfmotors dient, umfassend:

Einleiten eines erhitzten und unter Druck stehenden Fluids, insbesondere eines Heißdampfs, in eine Vorkammer (56) des federlosen Steuerventils (50), und
Druckbeaufschlagen des Ventilkörpers (52) mit einem durch das eingeleitete Fluid erzeugten Fluiddrucks, wodurch der Ventilkörper (52) in Schließrichtung (S) in den Ventilsitz (51) gedrückt oder gegen den Ventilsitz (51) kraftbeaufschlagt wird,
wobei zum Öffnen des Steuerventils (50) der Ventiltrieb (54) entgegen der Schließrichtung (S) des Steuerventils (50) in Kontakt mit dem Ventilkörper (52) gebracht wird, wodurch der Ventilkörper (52) gegen den daran anliegenden Fluiddruck in die geöffnete Stellung des Steuerventils (50) bewegt oder geschoben wird.

16. Verfahren nach Anspruch 15, bei dem zum Schließen des Steuerventils (50) der Ventilkörper (52) durch den am Ventilkörper (52) anliegenden Fluiddruck in Schließrichtung (S) des Steuerventils (50) in den Ventilsitz (51) gedrückt oder gegen den Ventilsitz (51) kraftbeaufschlagt wird, wobei der Schließvorgang bevorzugt gegen den sich im Arbeitsraum (15) vorherrschenden, sich insbesondere abbauenden, Arbeitsdruck erfolgt, welcher auf der dem Ventilsitz (51) zugewandten Seite des Ventilkörpers (52) anliegt.

Fig. 1

EP 4 001 709 A1

**Fig. 2**

Fig. 3

Fig. 4

Fig. 5

Fig. 6

**Europäisches Patentamt**

**European Patent Office**

**Office européen des brevets**

**EUROPÄISCHER RECHERCHENBERICHT**

Nummer der Anmeldung

EP 20 20 8361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/184801 A1 (GURNEY RICHARD STILLARD [ZA]) 2. Juli 2015 (2015-07-02) | 1,2,5, 7-10 | INV. F16K1/12 |
| Y | * Absatz [0019]; Abbildung 2 * | 3,4,6, 11-16 | F16K15/18 F16K17/04 |
| | ----- | | F16K1/30 |
| Y | DE 277 615 C (NA) 24. August 1914 (1914-08-24) * das ganze Dokument * | 3,4,6 | F16K31/44 |
| | ----- | | |
| Y,D | WO 2016/146159 A1 (AROSS 3D GMBH [DE]) 22. September 2016 (2016-09-22) * das ganze Dokument * | 11-16 | |
| | ----- | | |

**RECHERCHIERTE SACHGEBIETE (IPC)**

F16K

Der vorliegende Recherchenbericht wurde für alle Patentansprüche erstellt

| Recherchenort | Abschlußdatum der Recherche | Prüfer |
|---|---|---|
| Den Haag | 3. Mai 2021 | Schumacher, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 8361

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2021

| Im Recherchenbericht angeführtes Patentdokument | Datum der Veröffentlichung | Mitglied(er) der Patentfamilie | Datum der Veröffentlichung |
|---|---|---|---|
| US 2015184801 A1 | 02-07-2015 | BR PI0925023 A2<br>MX 341982 B<br>US 2012067440 A1<br>US 2015184801 A1<br>WO 2010127373 A1<br>ZA 201108326 B | 16-10-2018<br>08-09-2016<br>22-03-2012<br>02-07-2015<br>04-11-2010<br>31-10-2012 |
| DE 277615 C | 24-08-1914 | KEINE | |
| WO 2016146159 A1 | 22-09-2016 | EP 3271557 A1<br>WO 2016146159 A1 | 24-01-2018<br>22-09-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2016146159 A1